Europäisches Patentamt

European Patent Office

Office européen des brevets

(11) Publication number: **0 234 025**
**A2**

# (12) EUROPEAN PATENT APPLICATION

(21) Application number: **86117327.6**

(22) Date of filing: **17.12.82**

(51) Int. Cl.4: **G01F 11/02 , B01J 4/02**

(30) Priority: **29.01.82 US 343807**

(43) Date of publication of application:
**02.09.87 Bulletin 87/36**

(60) Publication number of the earlier application in
accordance with Art.76 EPC: **0 085 171**

(84) Designated Contracting States:
**CH DE FR GB IT LI NL SE**

(71) Applicant: **THE PERKIN-ELMER CORPORATION**
**761 Main Avenue**
**Norwalk Connecticut 06859-0074(US)**

(72) Inventor: **Schmid, Carl E.**
**99 Buck Hill Road**
**Easton Connecticut 06612(US)**

(74) Representative: **Patentanwälte Grünecker,**
**Kinkeldey, Stockmair & Partner**
**Maximilianstrasse 58**
**D-8000 München 22(DE)**

(54) Solvent delivery system.

(57) A solvent delivery system which provides a substantially uniform flow includes two synchronized pistons adapted to serially transport successive solvent compositions from one piston to the other prior to delivery to a chromatography column.

FIG. 1

## SOLVENT DELIVERY SYSTEM

The present invention generally relates to a solvent delivery system and, in particular, relates to such a system including two synchronized pistons adapted to serially transport solvent mixtures of successively varying composition to a chromatographic fractionating column.

The invention especially relates to a fluid pumping system comprising a positive displacement delivery pump including a cylinder, a piston disposed for reciprocation in the cylinder and means defining inlet and outlet flow passages in communication with said cylinder, drive means for imparting reciprocative motion to said piston.

The advent of solvent gradient analysis in the field of liquid chromatography has resulted in the need for improved delivery systems, i.e., means for delivering solvent mixtures, or compositions, from a solvent reservoir to the chromatographic column. The major difficulty is to satisfy the requirements to vary the solvent compositions while delivering a small volume thereof to the column; to select low stable percentage composition levels and to maintain a uniform flow rate to the column while column pressure changes. To date, these requirements have been difficult to satisfy simultaneously with either "pre-pump gradient systems" or "post-pump gradient systems".

A conventional post-pump gradient forming system generally includes a separate pump and motor for each solvent. Because the flow rate of each pump varies during each cycle of the pump, such systems require a mixture to smooth out the composition variations which occur where the two solvent streams are joined. The inclusion of such a mixer is undesirable because it increases the volume of the system and thus the time required to change composition levels. A further problem is that solvents having different viscosities and compressibilities are often used to form a single solvent composition. When the solvent composition is changed, the column pressure changes which in turn changes the flow rate of one or more of the solvents, i.e., each pump operates under the same pressure change, and thus the volume of each solvent pumped will depend upon its compressibility. Thus, each solvent has a different flow rate and consequently, the solvent composition is always somewhat in error.

A conventional pre-pump gradient system generally includes a single motor and pump. In such a system the solvent composition is determined by low pressure valves the degree of duration of opening of which select solvent combinations and proportions during the refill stroke of the delivery piston. One inherent disadvantage of such a system is the conflicting requirements it imposes on the time allowed to refill the delivery piston cylinder. The conflicting requirements are that to maintain uniform flow to the column it is required to minimize refill time, but reducing the refill time increases the requisite average flow rate through the solvent selector valves to a level where the finite valve switching time limits the minimum controllable volume and hence the minimum controllable composition level. Additionally, valve switching is complicated by the non-linear flow of solvents through the valves during refill.

One practical solution is a delivery system which includes a pulse damper and a discrete mixing chamber and which employs correction curves relating valve programming to particular solvent compositions.

### Summary of the Invention

Accordingly, one object of the present invention is to provide a solvent delivery system which maintains a substantially uniform solvent delivery flow of selected component solvents without the need for a discrete mixer.

Another object of the present invention is to provide such a solvent delivery system which is time independent of the valves controlling the flow of the individual solvents.

These objects are achieved in accordance with the invention by a relatively slow advance stroke - (pumping stroke) and rapid retraction stroke - (refilling stroke); and metering pump means operative in timed relation to the reciprocation of said piston of the delivery pump for measuring a volume of fluid at constant pressure and transferring the measured volume to said delivery pump during said retraction stroke (refilling stroke).

Other objects and advantages will become apparent to those skilled in the art from the following detailed specification taken in conjunction with the appended drawing.

### Brief Description of the Drawing

The drawing, which is not to scale, includes:

Figure 1, which is a schematic representation of a solvent delivery system embodying the principles of the present invention;

Figure 1A, which is a profile of a cam useful in the system of Figure 1; and

Figures 2A-2H, which are timing diagrams showing the dynamic relationship between the elements of the system shown in Figure 1.

Detailed Description of the Invention

A solvent delivery system, generally indicated at 10 in the drawing and embodying the principles of the present invention, includes a pumping piston 12 having a pumping piston cylinder 14 associated therewith and a metering piston 16 having a metering piston cylinder 18 associated therewith. The system 10 further includes a means 20 for controlling the movement of the pumping piston, as well as a means 22 for passively synchronizing the movement of the metering piston 16 to the movement of the pumping piston 12. Thus, via the means 22 the metering piston 16 is slaved to the pumping piston 12. The system 10 further includes a plurality of solvent sources 24, or reservoirs, individually designated as A, B, C and D and conduit means 26, 28 and 30 for conveying solvents, respectively, from the reservoirs 24 to the metering piston cylinder 18, from the metering piston cylinder 18 to the pumping piston cylinder 14, and from the pumping piston cylinder 14 to a chromatography column (not shown).

In a specific embodiment, the means 20 for controlling the movement of the pumping piston includes a stepper motor 32 which rotates through a predetermined angle in response to each electrical pulse provided thereto. Stepper motors are well known in the electrical art and as such, a detailed description thereof is deemed unnecessary herein. However, in this particular embodiment the stepper motor 32 is preferred that the stepper motor 32 be provided with an electrical signal having a maximum frequency of 5000 pulses per second. Thus, the stepper motor 32 rotates at a maximum speed of 12.5 revolutions per second. The electrical signal is provided by a system control circuitry 34. The system control circuitry 34 referred to herein is explained in detail in EP 0 085 172 and which is incorporated by reference herein.

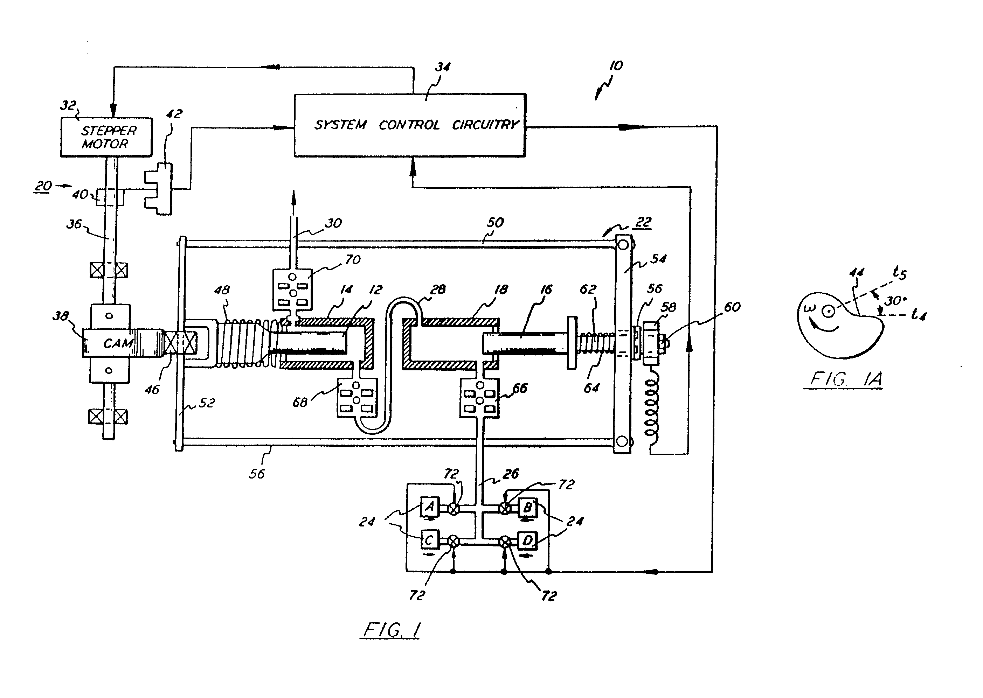

A shaft 36 is driven by stepper motor 32 through a four to one reduction (not shown) and is rotated thereby. Preferably, the shaft 36 carries a cam 38 and a shaft position indicator 40 thereon. The shaft position indicator 40 provides a signal, via a transducer 42, for example, to the control circuitry 34 for use thereby in coordinating the system operation. The cam 38 preferably has a profile 44, i.e., a peripheral contour, as shown in Figure 1A. The cam 38 is contacted by a cam follower 46 which is adapted to translate the rotational movement of the cam 38 into linear motion of the pumping piston 12 within the pumping piston cylinder 14. Preferably, the pumping piston 12 includes a biasing means 48 associated therewith which maintains the cam follower 46 against the cam 38. The particular biasing means 48 employed is arbitrary, although a return spring mechanism is preferred.

Although discussed in more detail in the above-mentioned copending patent application, it should be noted herein that the electrical signal from the transducer 42 associated with the shaft position indicator 40 can be, in fact, used as a pumping piston position indicator for the control circuitry 34.

As aforestated, the metering piston 16 is passively synchronized with the pumping piston 12 by the means 22, which in this embodiment is a pair of tie rods 50 together with piston linkages 52 and 54. As shown in Figure 1, the piston linkage 52 connects the tie rods 50 to the pumping piston 12 and the piston linkage 54 connects the tie rods 50 to the metering piston 16. Thus, the movement of both the metering piston 16 and the pumping piston 12 is controlled by the single stepper motor 32.

The pumping piston 12 and the metering piston 16, via the means 22, are synchronized such that when the pumping piston 12 has reached the end of its pumping stroke, i.e., the pumping cylinder 14 is effectively empty, the metering piston 16 reaches the end of its intake stroke, i.e., the metering cylinder 18 is full, and vice versa. Hence, the total internal volume is fixed, and the inlet flow to the metering piston cylinder 18 is, for all intents and purposes, the same as the outlet flow from the pumping piston cylinder 14.

In one specific embodiment, an electrical contact 56 is carried on the piston linkage 54 associated with the metering piston 16. A cooperatively adapted electrical contact 58 is affixed to one end 60 of a shaft 62 extending from the metering piston 16. The contact 56 and contact 58 are arranged such that a circuit is completed, i.e., the contact 56 makes connnection with the contact 58 when solvent delivery from the sources 24 to the metering piston cylinder 18 begins. When the linkage 54 forces the metering piston cylinder 16 to begin emptying the metering piston cylinder 18, the circuit is opened in preparation for the next cycle.

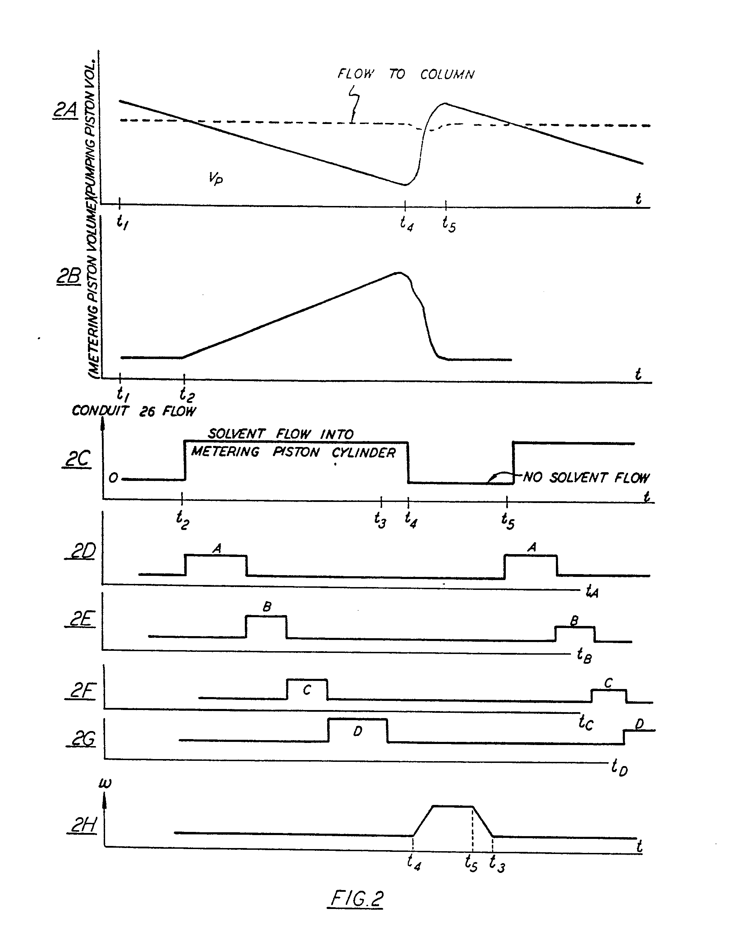

Preferably, in the above arrangement, the metering piston 16 is provided with a bias spring 64 which holds the contact 56 against contact 58 when the pressure in the metering piston cylinder 18 is below a fixed level set by the bias spring; in this case 100 p.s.i. is chosen. Thus, an electrical signal is provided at $t_2$ Figure 2C, marking the beginning of solvent flow into the metering piston cylinder 18. The end of flow is marked at $t_4$, Figure 2C, at which point the cam 38 has reached its high point. This point is marked electrically by sensor 42. Thus, the volume entering the metering piston cylinder is available as an electrical analog to be computed by the system control circuitry 34 from the number of steps representing position of the metering piston 16 occurring within the signal transitions $t_2$ and $t_4$. This volume, so derived, is the analog of the volume at 100 p.s.i. of mixture which left the pumping piston cylinder 14 on the previous stroke. The availability of this analog volume signal allows the system control circuitry 34, for instance, to program the valves A, B, C and D Figures 2D through 2G, such that the number of stepper motor 32 pulses any one valve is open ($N_A$) as compared to the current number of stepper motor pulses between $t_2$ and $t_4$ ($N_T$) is the desired $N_A$. That is %A = $N_A/N_T$ and the composition so generated is independent of the column back pressure. Furthermore, the accumulation of $N_T$ is a direct analog of the total volume of mixture referred to 100 p.s.i. which leaves the solvent delivery system. This analog signal is available to define column retention volume for eluting peaks.

Preferably, the metering piston 16 has a diameter of about 0.417 cm, whereas the pumping piston 12 has a diameter of about 0.390 cm. By making the metering piston 16 somewhat larger in diameter than the pumping piston 12, not only is complete filling of the pumping piston cylinder 14 assured, but also the braking of the contacts 58 and 56 is ensured.

The above-described system 10 can be further optimized by minimizing the volumes of the fluid carrying conduits 26, 28 and 30 therein. Specifically, the conduit means 26 connects the solvent sources 24 to the inlet of the metering piston cylinder 18. Fluid flow therethrough is controlled by a single set of ball check valves 66. The conduit means 28 connects the outlet of the metering piston cylinder 18 to the inlet of the pumping piston cylinder 14. Fluid flow therethrough is controlled via a single set of ball check valves 68. The conduit means 30 connects the outlet of the pumping piston cylinder 14 to the remainder of the chromatography system and fluid flow therethrough is controlled by single set of ball valves 70. Thus, from the solvent sources 24 through the outlet of the pumping piston cylinder 14 there is a minimal amount of fluid conduit and only three sets of check valves, 66, 68 and 70. Further, although each undivided solvent source 24 includes a solvent source valve 72, the opening and closing thereof occurs during the refilling of the metering piston cylinder 18 and not during the refilling of the pumping piston cylinder 14. Thus, the non-pumping time of the system can and, in fact, is minimized independent of valve switching speed limitations.

Referring now to the timing diagrams of Figure 2, the operation of the system 10 will be discussed in detail. Specifically, as shown in Figures 2A and 2B at $t_1$, the pumping piston cylinder 14 has a fluid volume $V_P$ therein which is at its maximum and, as shown in Figure 2B, the volume $V_M$ in the metering piston cylinder 18 is at its minimum. At time $t_1$, the pumping piston 12 begins motion into the pumping piston cylinder 14 to empty the contents thereof into the column, the metering piston 16 initially remains stationary while the gap between contacts 56 and 58 narrows while the pressure in the metering cylinder 18 remains essentially constant until time $t_2$ when contact 56 touches contact 58 providing a continuity signal and simultaneously initiating the uniform retraction of the metering piston 16. The metering piston is then retracted at a uniform rate until $t_4$, at which time the cam 44 is at its highest point, the metering piston cylinder 18 is completely filled and the pumping piston cylinder 14 is completely emptied.

The pumping piston 12 then withdraws and the metering piston 16 pumps the solvent from the metering piston cylinder 18 to the pumping piston cylinder 14 between $t_4$ and $t_5$. The short time interval, $t_4$ to $t_5$, is achieved by employing a cam profile as shown in Figure 1A and programming the stepper motor angular velocity profile as shown in Figure 2H. The combination of these two factors results in a very short pumping piston cylinder 14 refill time. Also, during the pumping piston cylinder 14 refill period $t_4$ to $t_5$, the contact 56 separates from contact 58 compressing spring 64 as a result of the hydraulic pressure in metering piston cylinder 18 resulting from the slightly larger diameter metering piston 16 not being required to travel as far as the smaller pumping piston 12 while filling the pumping piston cylinder 14. This relation of metering piston 16 to pumping piston 12 ensures that the pumping piston cylinder 14 is totally filled at a positive pressure and also that when the metering piston contact 58 touches contact 56 marking the beginning of flow into the metering pump cylinder 18 the deceleration of the cam angular speed $\omega$ has settled out to the nominal steady state value dictated by the desired flow. Figure 2H shows the transient is completed at $t_3$ and Figure 2C shows solvent flow into the metering piston begins at $t_5$ where $\omega$ is stable.

Figures 2D through 2G are representations of solvent flow from each of the solvent sources 24 during the time interval $t_2$ to $t_4$. Preferably, the sources 24 are all under the same pressure, which is relatively low, i.e., about 5 p.s.i. This pressure is much larger than the pressure drop caused by the flow into the metering piston cylinder 18 passing through values 72, conduit 26 and input check valve 66. As a result, the flow into the metering pump piston cylinder 18 occurs at a slow uniform rate dictated by the metering piston 16 velocity and at a low fixed pressure of approximately 5 p.s.i. throughout. Thus, mixing occurs at constant pressure and constant flow and is independent of column pressure drop.

In actual practice, the metering piston inlet check valve 66 requires small but finite reverse flow to occur before closing. To prevent this transient from damaging the solvent control valves 24 and to improve the low level composition performance, the system control circuitry, preferably adjusts the solvent selector valves 72 such that the majority solvent valve is open during the transitions at $t_2$ and $t_4$ and remains open during the interval from $t_4$ to $t_5$ even though no flow occurs for the majority of the $t_4$ and $t_5$ interval. Thus, one solvent selector valve 24 is always open. Also, in practice, the inlet flow to the metering piston cylinder 18 is free of transients for valves 24 that are programmed to open at a phase removed from the ends $t_2$ and $t_4$. For this reason, it is preferred that the system control circuitry open the lowest composition solvent valves open near the middle of the $t_2$ to $t_4$ refill interval.

The major advantage of the solvent delivery system 10 described herein can be recognized from the dotted line shown in Figure 2A which represents the flow to the column from the system 10. As shown, the column flow is substantially constant, which is ideal in liquid chromatography. In fact, the only deviation from the uniform flow occurs during transfer of the solvent composition from the metering cylinder 18 to the pumping cylinder 14. This, of course, has been minimized by providing a positive pressure means of transferring the mixture from the metering pump cylinder 18 to the pumping cylinder 14. In practice, the transfer time is limited by the dynamic response of the stepper motor.

Mixing of the components of the solvent composition occurs not only from the serial delivery thereof into the metering cylinder but also from the delivery thereof to the pumping piston cylinder 14. Further mixing occurs when the solvent composition is pumped from the pumping piston cylinder 14. Thus, the solvent composition is thoroughly mixed without the need for a discrete solvent apparatus.

Although a specific example has been described herein, other configurations are anticipated which do not deviate from the present invention. Hence, the description herein is deemed as exemplary and not as limiting, and the present invention is considered to be limited only by the claims appended hereto and the reasonable interpretation thereof.

## Claims

1. A fluid pumping system comprising:
a positive displacement delivery pump (12, 14) including a cylinder (14), a piston (12) disposed for reciprocation in the cylinder and means defining inlet and outlet flow passages in communication with said cylinder (14);
drive means (38) for imparting reciprocative motion to said piston (12) characterized by a relatively slow advance stroke (pumping stroke) and rapid retraction stroke (refilling stroke); and
metering pump means (16, 18) operative in timed relation to the reciprocation of said piston (12) of the delivery pump for measuring a volume of fluid at constant pressure and transferring the measured volume to said delivery pump (12, 14) during said retraction stroke (refilling stroke).

2. A fluid pumping system according to claim 1 characterized in that said metering pump means - (16, 18) comprises:
a cylinder (18), a piston (16) disposed for reciprocation in the cylinder (18) and means defining inlet (26) and outlet (28) flow passages in communication with the cylinder (18);
unidirectional flow passage (68) means hydraulically coupling to the outlet flow passage (28) of said metering pump cylinder (18) to the inlet flow passage of said delivery pump (12, 14); and
means for imparting reciprocative motion to said metering pump piston (16) 180° out of phase with the piston (12) of said delivery pump.

SYSTEM CONTROL CIRCUITRY

STEPPER MOTOR

CAM

FIG. 1

FIG. 1A

0 234 025

*FIG.2*